# EUROPÄISCHE PATENTSCHRIFT

(11) **EP 0 694 326 B1**
(45) Veröffentlichungstag und Bekanntmachung des Hinweises auf die Patenterteilung: **16.10.2002**
(21) Anmeldenummer: 95111970.0
(22) Anmeldetag: 28.07.1995
(51) Int. Cl.: B01D 19/00

(54) **Verfahren und Vorrichtung zum Entfernen von Gasblasen aus einer auszugebenden viskosen Flüssigkeit**
Process and device for the removal of gas bubbles from a viscous liquid which is to be delivered
Procédé et dispositif d'élimination de bulles de gaz d'un liquide visqueux à délivrer

(30) Priorität: 29.07.1994 DE 4427013
(43) Veröffentlichungstag der Anmeldung: 31.01.1996
(73) Patentinhaber: Loctite Deutschland GmbH, 81925 München (DE)
(72) Erfinder: Florian, Gerhard, D-83607 Holzkirchen (DE)
(74) Vertreter: Abitz, Walter, Dr.-Ing.

(56) Entgegenhaltungen:
- EP-A- 0 674 928
- WO-A-92/02306
- US-A- 2 765 045
- US-A- 3 789 584
- US-A- 4 257 562

## Beschreibung

Die Erfindung betrifft ein Verfahren und eine Vorrichtung zum Entfernen von Gasblasen aus einer auszugebenden viskosen Flüssigkeit, wobei die Flüssigkeit unter Druck in einem dünnen Strahl in eine geschlossene Kammer eingeleitet wird, die teilweise mit der Flüssigkeit gefüllt ist, so daß die Gasblasen aus der eingeleiteten Flüssigkeit freigesetzt werden. Die Flüssigkeit wird aus dem Behälter zu einer Ausgabeeinrichtung geführt.

US-A-4,257,562 beschreibt ein Verfahren, bei dem die Flüssigkeit mittels einer peristaltischen Pumpe durch eine horizontale Schlitzöffnung in einen Behälter eingeleitet wird. An der Oberseite des Behälters befindet sich eine Entlüftungsöffnung und von Hand oder automatisch durch ein geeignetes Entlüftungsventil wird von Zeit zu Zeit das angesammelte Gas abgelassen. Aus dem Behälter wird die Flüssigkeit zu einer Sprühdüse geleitet.

Aus US-A-4,921,133 ist es bekannt, die Flüssigkeit aus einem Drucktank in den Behälter zu leiten, wobei im Behälter Unterdruck herrscht, so daß die in der Flüssigkeit vorhandenen Gasblasen ihr Volumen vergrößern und platzen. In dem Behälter wird die Flüssigkeit auf eine rotierende Scheibe gegeben, von der sie durch Fliehkraft gegen die vertikalen Behälterwände geschleudert wird. Zur Steuerung des Flüssigkeitsstandes in dem Behälter sind geeignete Sensoren vorgesehen. Durch eine Schneckenpumpe wird die Flüssigkeit aus dem Behälter ausgetragen und zu der Ausgabeeinrichtung gefördert.

Aus WO-A-9202306 ist eine Entgasungsvorrichtung bekannt, bei der die zu entgasende Flüssigkeit abwechselnd einem von zwei Behältern zugeführt wird, so daß für einen kontinuierlichen Betrieb daher zwei Entgasungsbehälter erforderlich sind. In den Behältern wird durch Sieben und Anlegen von Unterdruck die Flüssigkeit entgast. Nach dem Entgasen der in einem Behälter vorhandenen Flüssigkeitsmenge wird diese nach Aufheben des Unterdrucks durch eine peristaltische Schlauchpumpe der Ausgabeeinrichtung zugeführt.

Der Erfindung liegt die Aufgabe zugrunde, ein Verfahren und eine Vorrichtung zum Entfernen von Gasblasen aus einer auszugebenden Flüssigkeit zu schaffen, die sich durch eine zuverlässige Funktion auszeichnen und ein kontinuierliches Auftragen der Flüssigkeit z.B. auf ein Werkstück ermöglichen.

Die Erfindung betrifft ein verfahren zum Entfernen von Gasblasen aus einer auszugebenden viskosen Flüssigkeit, wobei die Flüssigkeit mit einem ersten Druck in einem dünnen, breiten Strahl in eine geschlossene Kammer eingeleitet wird, die teilweise mit der Flüssigkeit gefüllt ist, so daß die Gasblasen aus der eingeleiteten Flüssigkeit austreten können, und wobei in der Kammer (15) ein zweiter Druck herrscht, der niedriger als der erste Druck ist, so daß in der Flüssigkeit vorhandene Gasblasen sich ausdehnen und platzen, worin der zweite Druch ausreicht, um die Flüssigkeit von der Kammer einer Ausgabeeinrichtung (Dosierventil) zuzuführen und aus ihr auszutragen, und die Differenz zwischen dem ersten Druck, mit dem die Flüssigkeit in die Kammer (15) eingeleitet wird, und dem in der Kammer (15) herrschenden, zweiten Druck konstant ist.

Vorzugsweise wird die Flüssigkeit in dem Behälter auf einem Niveau gehalten, das unter der Stelle liegt, an der die Flüssigkeit ins Behälterinnere eingeleitet wird.

Vorzugsweise sind der ersten Druck und der zweite Druck konstant.

Vorzugsweise wird das Gas der Gasblasen aus dem Behälter bei dem konstanten, zweiten Druck abgeleitet.

Die Vorrichtung zur Durchführung dieses Verfahrens ist dadurch gekennzeichnet, daß die Einrichtung zur Zuführung der Flüssigkeit diese mit einem konstanten ersten Druck zuführt und daß die Einrichtung zum Ableiten des angesammelten Gases aus dem Behälter ein Feindruckregler ist, der in der Kammer einen niedrigeren, konstanten zweiten Druck aufrechterhält.

Vorzugsweise weist die Vorrichtung eine Anzahl von hohlen Nadeln zur Zuführung der Flüssigkeit in die Kammer innerhalb des Behälters auf, wobei die Nadeln nach oben zeigen und leicht radial nach außen geneigt sind.

Vorzugsweise sind die Enden der Nadeln stark abgeflacht, so daß sich schlitzförmige Öffnungen am Ende der Nadeln für den Austritt der Flüssigkeit ergeben.

Vorzugsweise erstreckt sich die Zuführungsleitung für die Flüssigkeit von oben mittig in den Behälter und weist am unteren Ende mehrere Verbindungsöffnungen zu den hohlen Nadeln auf, wobei die Flüssigkeitsströmung um nahezu 180° nach oben umgelenkt wird. Das untere Ende der Zuführungsleitung ist dabei mit einem Verteilungskonus versehen, der nach unten spitz zuläuft. An seinem oberen Ende weist der Verteilungskonus eine die Zuführungsleitung umgebende Ringfläche auf. Diese Ringfläche fällt nach außen etwas ab und aus ihr stehen die hohlen Nadeln nach oben hervor.

Die durch die Erfindung erzielbaren Vorteile bestehen insbesondere darin, daß der Druck, mit dem die Flüssigkeit dem Behälter zugeführt wird, in dem Behälter nicht auf Null reduziert wird, so daß der verbleibende Restdruck, der zweite Druck, ausreicht, um die Flüssigkeit von dem Behälter der Ausgabeeinrichtung zuzuführen und aus ihr auszutragen. Da durch einen Feindruckregler der zweite Druck sehr genau auf einem bestimmten Wert gehalten werden kann, erfolgt das Austragen der Flüssigkeit durch die Ausgabeeinrichtung mit einem äußerst konstanten Durchflußwert.

Das erfindungsgemäße Verfahren und die erfindungsgemäße Vorrichtung eignen sich insbesondere zum Auftragen von mittel- und hochviskosen anaeroben Klebstoffen. Von Vorteil ist dabei, daß in dem Behälter zum Entfernen der Gasblasen der Druck nur soweit erniedrigt zu werden braucht, daß die vorhandenen Gasblasen, insbesondere Luftblasen, aus dem Klebstoff entfernt werden, daß der in dem Klebstoff gelöste Sauerstoff jedoch keine neuen Luftblasen bildet und nicht austritt. Dieser gelöste Sauerstoff ist bei anaeroben Klebstoffen notwendig, um ein vorzeitiges Aushärten des Klebstoffes zu verhindern.

Von Vorteil ist ferner, daß der Druck in der Verbindungsleitung zwischen Behälter und Ausgabeeinrichtung konstant bleibt, so daß auch in dieser Verbindungsleitung keine neuen Gasblasen entstehen. Bei einem Wechsel des Vorratsbehälters, aus dem die viskose Flüssigkeit unter dem ersten Druck in den Entgasungsbehälter gefördert wird, wird die Flüssigkeitsausgabe aus dem Entgasungsbehälter außerdem aufrechterhalten, solange in dem Entgasungsbehälter noch Flüssigkeit vorhanden ist. Der Vorratsbehälter kann also ohne Unterbrechung der Ausgabe der entgasten Flüssigkeit aus der Kammer ausgewechselt werden. Der in dem Behälter herrschende zweite Druck verhindert dabei, daß in der aus dem Behälter ausgegebenen Flüssigkeit der Druck abfällt und dadurch eine zusätzliche Entgasung und damit die Bildung neuer Gasblasen stattfindet.

Durch die Ausrichtung der hohlen Nadeln selbst und deren schlitzförmigen Austrittsöffnungen wird erreicht, daß mittel- und hochviskose Flüssigkeiten in einem flachen Strahl oder Wulst schräg nach oben austreten und dann auf einem Bogen mit sehr kleinem Radius nach unten umkippen und entlang der Außenseite der Nadeln und des sich zuspitzenden Verteilungskonus nach unten laufen. Im Bereich dieses Strahl- oder Wulstbogens unmittelbar nach dem Austritt der Flüssigkeit aus den Schlitzöffnungen der Nadeln liegt die Flüssigkeit nirgends an und weist deshalb und wegen der' Schlitzform der Nadelöffnungen eine sehr große Oberfläche auf. In der Flüssigkeit vorhandene Gasblasen haben daher zwangsläufig Berührung mit einer freien Oberfläche des Flüssigkeitsstrahls, so daß sie platzen und damit die Flüssigkeit verlassen. Dadurch daß die Flüssigkeit dann entlang der Nadeln und des konischen Zwischenstücks nach unten läuft, wird auch hier das Entstehen neuer Luftblasen verhindert.

Durch die sich konisch nach unten zuspitzende Form des Verteilungskonus wird insbesondere beim Zusammenbau des Behälters das Entstehen von Luftblasen verhindert.

Ein Ausführungsbeispiel der Erfindung wird nachfolgend anhand der Zeichnung erläutert. Es zeigen:
- Fig. 1: in schematischer Form ein System zum Zuführen einer Flüssigkeit, zum Entfernen von Luftblasen aus der Flüssigkeit und zum Ausgeben der Flüssigkeit;
- Fig. 2: im Schnitt den Behälter zum Entfernen von Gasblasen aus der Flüssigkeit;
- Fig. 3: von oben den Verteilungskonus mit den davon abstehenden hohlen Nadeln, wobei die Schrägstellung der Nadeln nicht berücksichtigt ist;
- Fig. 4: in Seitenansicht eine Nadel und
- Fig. 5: im Schnitt die Ausgabeeinrichtung.

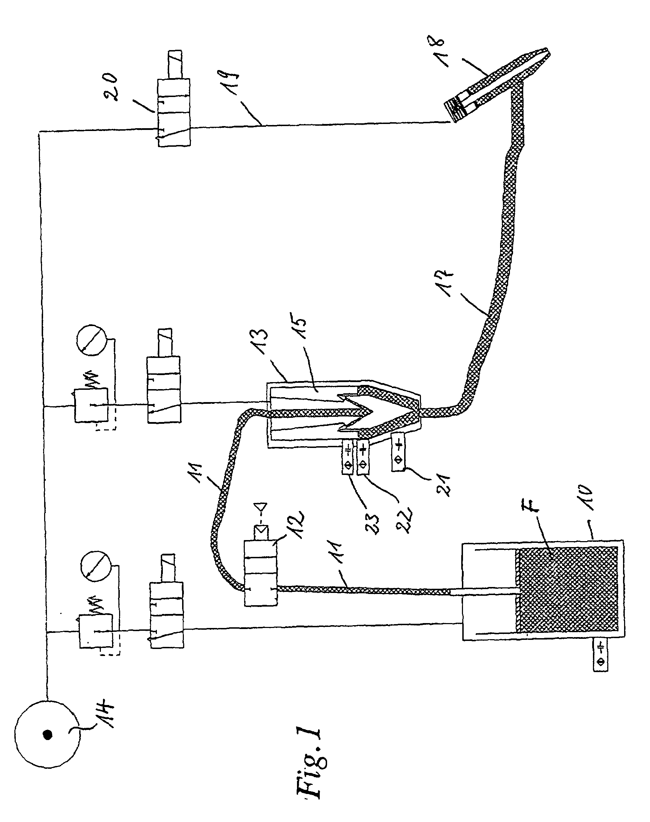

Gemäß Fig. 1 wird die auszugebende Flüssigkeit F aus einem Drucktank 10 über eine Zuführungsleitung 11 und ein Zuführungsventil 12 einem Entgasungsbehälter 13 zum Entfernen von Gasblasen aus der Flüssigkeit F zugeführt. Der Zuführdruck wird von einer Druckluftquelle 14 geliefert, die über einen Druckregler und ein Steuerventil einen auf der Flüssigkeit F im Drucktank 10 aufliegenden Kolben oder eine solche Membran mit Druckluft eines ersten Druckwertes beaufschlagt. Mit diesem ersten Druck wird die Flüssigkeit F dem Entgasungsbehälter 13 zugeführt. In dem Entgasungsbehälter 13 befindet sich eine Kammer 15, der die Flüssigkeit F zugeführt wird und in der der Druck mittels eines Feindruckreglers 16 auf einem niedrigeren, zweiten Wert konstant gehalten wird. Da der erste und der zweite Druck konstant gehalten werden, ist auch die Druckdifferenz konstant, die innerhalb der Kammer 15 besteht. Aufgrund dieser Druckdifferenz dehnen sich die in der zugeführten Flüssigkeit F vorhandenen Gasblasen aus und platzen schließlich. Die auf diese Weise entgaste Flüssigkeit F sammelt sich am Boden der Kammer 15 und wird am unteren Ende des Entgasungsbehälters 13 über eine Verbindungsleitung 17 zu einem Dosierventil 18 geführt. Das Dosierventil 18 wird pneumatisch betätigt, wozu es über eine Druckluftleitung 19 und ein Absperrventil 20 mit der Durckluftquelle 14 verbunden ist.

An dem Entgasungsbehälter 13 sind drei Sensoren 21, 22 und 23 vorgesehen. Am unteren Ende des Entgasungsbehälters 13 oder in der Verbindungsleitung 17 ist ein erster Sensor 21 vorgesehen, der feststellt, ob sich in der Verbindungsleitung 17 Flüssigkeit F befindet und der ein Warnsignal abgibt, wenn der Entgasungsbehälter 13 leerläuft. Im mittleren Bereich der Kammer 15 des Entgasungsbehälters 13 befindet sich ein zweiter Sensor 22, der ein Signal erzeugt, wenn der Flüssigkeitsstand innerhalb der Kammer 15 zu hoch ist. Durch dieses Signal wird das Zuführungsventil 12 geschlossen. Aus Sicherheitsgründen ist in geringem Abstand über dem zweiten Sensor 22 noch ein dritter Sensor 23 angeordnet, der ebenfalls den Flüssigkeitsstand mißt und bei einem zu hohen Flüssigkeitsstand ein Signal erzeugt, durch das das Zuführungsventil 12 ebenfalls geschlossen wird und zusätzlich der Drucktank 10 drucklos geschaltet wird und ein Warnsignal an das Wartungspersonal abgegeben wird.

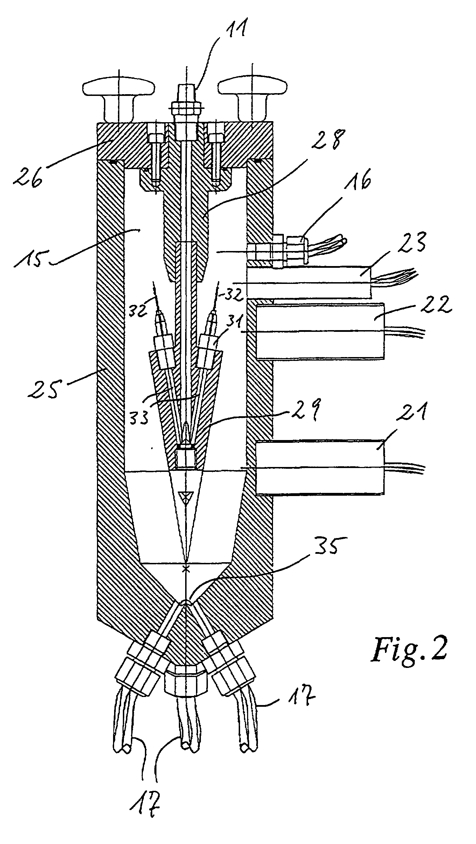

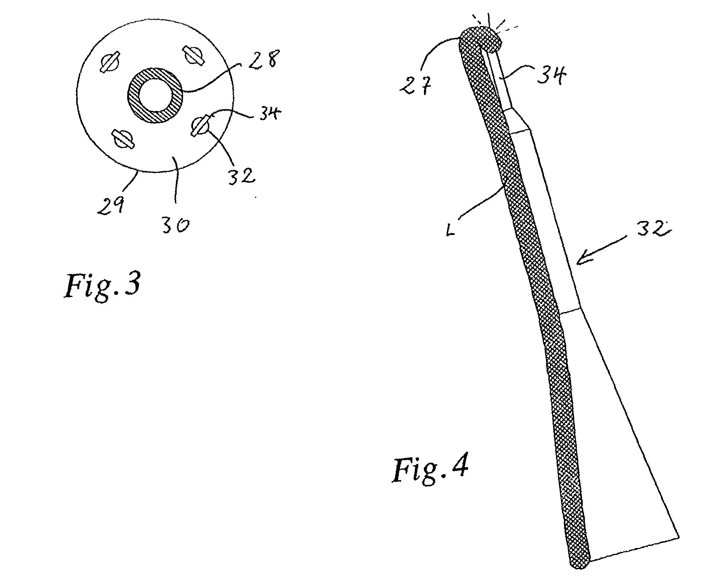

Die Fig. 2 bis 4 zeigen im Schnitt den Entgasungsbehälter 13 bzw. Einzelheiten davon. Der Entgasungsbehälter 13 wird gemäß Fig. 2 durch einen hohlzylindrischen Körper 25 mit einem geschlossenen Boden und einer abnehmbaren Abdeckung 26 gebildet, so daß die Kammer 15 geschlossen ist. Der Behälter 13 steht vertikal aufrecht. Durch die Abdeckung 26 ist die Zuführungsleitung 11 in Form eines Rohres 28 axial mittig bis in den unteren Bereich der Kammer 15 fortgesetzt. Am unteren Ende des Rohres 28 ist ein nach unten spitz zulaufender Verteilungskonus 29 angebracht, dessen Spitze nur einen geringen Abstand vom Boden der Kammer 15 hat. An der Oberseite weist der Verteilungskonus 29 eine das Rohr 28 umgebende, nach außen schräg abfallende Ringfläche 30 auf. In dieser Ringfläche 30 ist eine Anzahl von Aufnahmen 31 um das Rohr 28 herum verteilt eingeschraubt oder eingelassen, die jeweils eine hohle Nadel 32 halten. Jede Nadel 32 ist über einen Kanal 33 mit dem Kanal in dem Rohr 28 und damit mit der Zuführungsleitung 11 verbunden. Die Nadeln 32 zeigen nahezu vertikal nach oben, sind jedoch leicht nach außen geneigt, so daß sie mit der Achse der Kammer 15 einen kleinen Winkel von z.B. 15° einschließen. Die Nadelspitzen 34 sind gemäß Fig. 3 tangential abgeflacht, d.h. die längere Abmessung der schlitzförmigen Öffnungen an den Nadelspitzen 34 zeigen in Umfangsrichtung. In Verbindung mit der leicht nach außen zeigenden Ausrichtung der Nadeln 32 wird dadurch erreicht, daß die unter Druck aus den Schlitzöffnungen austretende Flüssigkeit die Form eines flachen Bandes hat. Infolge seiner radial nach außen zeigenden Bewegungskomponente kippt dieser Flüssigkeitsstrahl oder dieses Flüssigkeitsband infolge seiner relativ geringen Strahlgeschwindigkeit in einem Bogen 27 mit einem Krümmungsradius von ca. 1 mm nach unten um und fließt die Flüssigkeit dann entlang der Außenseite der Nadeln 32, der schräg abfallenden Ringfläche 30 und der Außenseite des Verteilungskonus 29 nach unten in die im unteren Bereich der Kammer 15 vorhandene Flüssigkeit.

Durch den Druckabfall innerhalb der Flüssigkeit F über den feinen Nadelkanal vergrößern sich die Luftblasen in der Flüssigkeit beim Austritt aus den Schlitzöffnungen und platzen dabei, so daß die Gasblasen aus der Flüssigkeit austreten. Die Gasmenge innerhalb der Kammer 15 nimmt dadurch zu, wodurch der Flüssigkeitsspiegel innerhalb der Kammer 15 sinkt oder der Druck ansteigt. Durch die zweiten und dritten Sensoren 22, 23 wird die Flüssigkeitszufuhr über das Zuführungsventil so gesteuert, daß die Flüssigkeit im Bereich des Verteilungskonus 29 liegt. Durch den Feindruckregler 16 wird der Druck innerhalb der Kammer 15 auf einem konstanten Wert gehalten, unabhängig von dem Flüssigkeitsniveau.

Die Kammer 15 verengt sich nach unten kegelförmig und am tiefsten Punkt 35 befinden sich Auslaßbohrungen für den Anschluß von einem oder mehreren, im vorliegenden Fall drei, Dosierventilen 18.

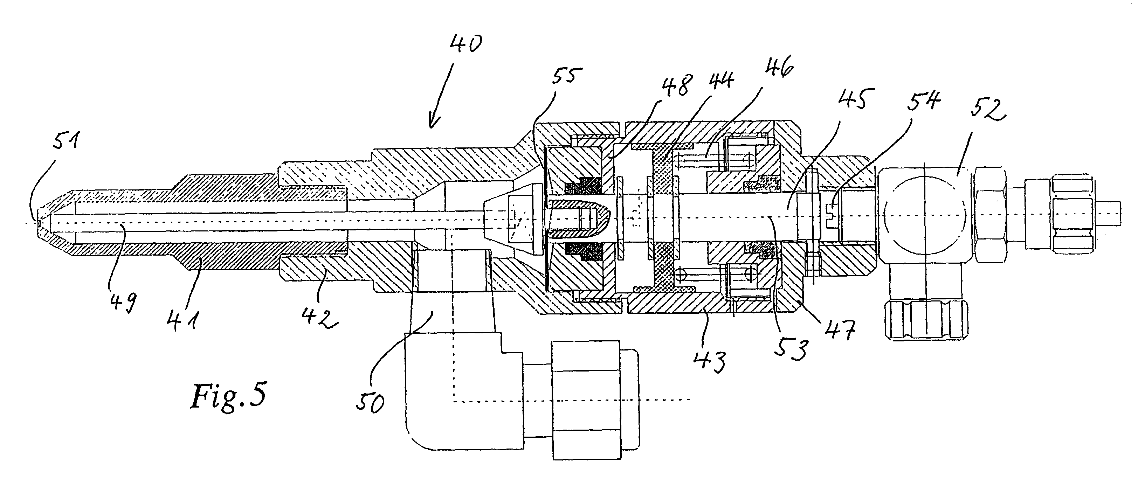

Das Dosierventil 18 ist in Fig. 5 im Schnitt dargestellt. Es weist danach ein vierteiliges Gehäuse 40 auf, das aus einer Spitze 41, einem Mittelabschnitt 42, einem hinteren, zylindrischen Abschnitt 43 und einer hinteren Abdeckung 47 besteht. In dem zylindrischen Abschnitt 43 ist ein Kolben 44 verschiebbar gelagert. Der Kolben 44 wird durch eine Kolbenstange 45 geführt und durch eine Schraubendruckfeder 46 nach vorne gedrückt. Der zylindrische Abschnitt 43 ist durch die Abdeckung 47 verschlossen und die Kolbenstange 45 wird in einer mittigen axialen Öffnung der Abdeckung 47 und in einer vor dem Kolben 45 liegenden Querwand 48 geführt. Am vorderen Ende der Kolbenstange 45 ist eine Ventilnadel 49 befestigt, die sich axial durch den Mittelabschnitt und die Spitze 41 erstreckt. Durch eine seitliche Anschlußöffnung 50 wird die auszugebende Flüssigkeit zugeführt, dié durch einen von der Anschlußöffnung 50 durch den Mittelabschnitt 42 und die Spitze 41 führenden axialen Strömungskanal strömt, der sich am vorderen Ende konisch zu einer Ausgabeöffnung 51 verjüngt. Das vordere Ende der Ventilnadel 49 verjüngt sich in gleicher Weise konisch und liegt unter der Kraft der Schraubendruckfeder 46 in der Ausgabeöffnung 51 an und verschließt diese. Im geschlossenen Zustand ist die Spitze der Ventilnadel 49 bündig mit dem vorderen Ende der Spitze 41 des Gehäuses 40, so daß sich vor der Ventilnadel 49 kein Raum befindet, in dem sich Flüssigkeit halten könnte. Der hintere pneumatische Abschnitt ist durch eine Teflon-Dichtung 55 von dem vorderen Flüssigkeitsabschnitt getrennt.

Vom hinteren Ende her kann über einen Druckluftanschluß 52 und über die Druckluftleitung 19 (Fig. 1) Druckluft durch eine vom hinteren Ende ausgehende axiale Bohrung 53 der Kolbenstange und eine kleine Querbohrung am vorderen Ende dieser axialen Bohrung 53 auf die Vorderseite des Kolbens 44 geleitet werden, wodurch der Kolben 44 nach hinten, in Fig. 5 nach rechts, bewegt wird und die Ventilnadel 49 von der Ausgabeöffnung 51 zurückgezogen wird, so daß Flüssigkeit durch den axialen Kanal und aus der Ausgabeöffnung 51 strömen kann. Die Stellung, bis zu der die Ventilnadel 49 zurückgezogen werden kann, kann durch eine auf das hintere Ende der Kolbenstange 45 wirkende Einstellschraube 54 eingestellt werden.

Insgesamt ist das Dosierventil 18 so ausgebildet, daß die Strömungsräume ein möglichst kleines Volumen haben, damit z.B. bei der Verwendung zum Auftragen von Klebstoff, nur eine sehr kleine Menge Klebstoff innerhalb des Dosierventils verbleibt. Dadurch daß in der geschlossenen Stellung die Ventilnadel 49 die Spitze 41 des Gehäuses 40 so verschließt, daß vor der Ventilnadel 49 kein Raum verbleibt, in dem Flüssigkeit, z.B. Klebstoff, stehen bleibt, ergibt sich beim Öffnen des Dosierventils an der Spitze der Ventilnadel 49 kein Raum, in dem durch das Zurückziehen der Ventilnadel 49 eine Druckerniedrigung stattfindet. Eine solche Druckerniedrigung könnte nachteilig sein, da sie in der Flüssigkeit die Bildung von Gasblasen verursachen kann.

Die Werkstoffe für die einzelnen Komponenten der Entgasungseinrichtung 13 und des Dosierventils 18 sind unkritisch und können insbesondere Metall oder Kunststoff sein. Es ist dabei darauf zu achten, daß diese Werkstoffe mit der zu fördernden Flüssigkeit, aus der die Gasblasen entfernt werden, verträglich sind.

## Patentansprüche

1. Verfahren zum Entfernen von Gasblasen aus einer auszugebenden viskosen Flüssigkeit (F), wobei die Flüssigkeit (F) mit einem ersten Druck in einem dünnen, breiten Strahl in eine geschlossene Kammer (15) eingeleitet wird, die teilweise mit der Flüssigkeit (F) gefüllt ist, so daß die Gasblasen aus der eingeleiteten Flüssigkeit austreten können, und wobei in der Kammer (15) ein zweiter Druck herrscht, der niedriger als der erste Druck ist, so daß in der Flüssigkeit vorhandene Gasblasen sich ausdehnen und platzen,
**dadurch gekennzeichnet, daß**
der zweite Druck ausreicht, um die Flüssigkeit von der Kammer (15) einer Ausgabeeinrichtung (Dosierventil 18) zuzuführen und aus ihr auszutragen, und
die Differenz zwischen dem ersten Druck, mit dem die Flüssigkeit in die Kammer (15) eingeleitet wird, und dem in der Kammer (15) herrschenden, zweiten Druck konstant ist.

2. Verfahren nach Anspruch 1, **dadurch gekennzeichnet, daß** die Flüssigkeit in der Kammer (15) auf einem Niveau gehalten wird, das unter der Stelle (Nadelspitzen 34) liegt, an der die Flüssigkeit in die Kammer (15) eingeleitet wird.

3. Verfahren nach Anspruch 1 oder 2, **dadurch gekennzeichnet, daß** der erste und der zweite Druck konstant sind.

4. Vorrichtung zur Durchführung des Verfahrens nach einem der Ansprüche 1 bis 3,
mit einem Entgasungsbehälter (13), in dem sich eine geschlossene Kammer (15) befindet;
mit einer Einrichtung (10, 11, 12, 14) zum Zuführen der Flüssigkeit (F) in die Kammer (15);
mit einer Einrichtung zum Ableiten der Flüssigkeit (F) aus der Kammer (15) und
mit einer Einrichtung zum Entfernen des angesammelten Gases aus der Kammer (15),
**dadurch gekennzeichnet,**
**daß** die Einrichtung zur Zuführen der Flüssigkeit (F) diese mit einem konstanten ersten Druck zuführt und
**daß** die Einrichtung zum Ableiten des angesammelten Gases aus der Kammer (15) ein Feindruckregler (16) ist, der in der Kammer (15) einen niedrigeren, konstanten zweiten Druck aufrechterhält, der ausreicht, um die Flüssigkeit von der Kammer (15) einer Ausgabeeinrichtung (Dosierventil 18) zuzuführen und aus ihr auszutragen.

5. Vorrichtung nach Anspruch 4, **dadurch gekennzeichnet, daß** die Einrichtung zum Zuführen der Flüssigkeit (F) mit dem konstanten ersten Druck einen Drucktank (10) für einen Flüssigkeitsvorrat und eine Druckluftquelle (14) aufweist, die in dem Drucktank (10) den konstanten ersten Druck erzeugt.

6. Vorrichtung nach Anspruch 4 oder 5, **dadurch gekennzeichnet, daß** in der Kammer (15) ein sich nach unten verjüngender und vom Boden der Kammer beabstandeter Verteilungskonus (29) angeordnet ist, der nach oben und leicht nach außen gerichtete Hohlnadeln (32) trägt, denen durch Kanäle (33) innerhalb des Verteilungskonus (29) die Flüssigkeit mit dem konstanten ersten Druck zugeführt wird und deren Spitze (34) zu einer breiten, schlitzförmigen Öffnung abgeflacht ist, wobei die längere Abmessung der Schlitzöffnung in tangentialer Richtung zeigt.

7. Vorrichtung nach einem der Ansprüche 4 bis 6, **gekennzeichnet durch** Sensoren (21, 22, 23) zur Aufrechterhaltung des Flüssigkeitsniveaus in der Kammer (15) unterhalb der Schlitzöffnungen (Spitzen 34) der Nadeln (32).

8. Vorrichtung nach einem der Ansprüche 4 bis 7, **gekennzeichnet durch** ein Dosierventil (18) dem die Flüssigkeit (F) aus der Kammer (15) über eine Verbindungsleitung (17) **durch** den in der Kammer (15) herrschenden konstanten zweiten Druck zugeführt wird.

9. Vorrichtung nach Anspruch 8, **dadurch gekennzeichnet, daß** das Dosierventil (18) eine Ventilnadel (49) aufweist, die die Austrittsöffnung im geschlossenen Zustand so verschließt, daß vor der Spitze der Ventilnadel (49) kein Raum verbleibt, in dem im geschlossenen Zustand des Dosierventils (18) Flüssigkeit (F) verbleiben könnte.

## Claims

1. Process for the removal of gas bubbles from a viscous liquid (F) to be dispensed, the liquid (F) being introduced with a first pressure in a thin, broad jet into a closed chamber (15) which is partially filled with the liquid (F), with the result that the gas bubbles can escape from the introduced liquid, and a second pressure, which is lower than the first pressure, prevailing in the chamber (15), with the result that gas bubbles present in the liquid expand and burst,
**characterized in that**
the second pressure is sufficient for supplying the liquid from the chamber (15) to a dispensing device (dosing valve 18) and for dispensing it from that and
the difference between the first pressure, with which the liquid is introduced into the chamber (15), and the second pressure prevailing in the chamber (15) is constant.

2. Process according to claim 1, **characterized in that** the liquid in the chamber (15) is kept at a level which lies below the site (point 34 of needles) at which the liquid is introduced into the chamber (15).

3. Process according to one of claims 1 to 2, **characterized in that** the first and second pressures are constant.

4. Apparatus for carrying out the process as defined in any one of claims 1 to 3, comprising
a degassing vessel (13) containing therein a closed chamber (15),
means (10, 11, 12, 14) for feeding the liquid (F) into the chamber (15),
means for discharging the liquid (F) from the chamber (15), and
means for removing collected gas from the chamber (15),
**characterized in that**
the means for feeding the liquid (F) feed it at a constant first pressure and
the means for removing the collected gas from the chamber (15) is a precision pressure regulator (16) which maintains a lower, constant second pressure in the chamber (15) which is sufficient for supplying the liquid from the chamber (15) to a dispensing device (dosing valve 18) and for dispensing it from that.

5. Apparatus according to claim 4, **characterized in that** the means for feeding the liquid (F) with the constant first pressure includes a pressure tank (10) for a supply of liquid and a compressed air source (14) which provides said constant first pressure in the pressure tank (10).

6. Apparatus according to claim 5 **characterized in that** a dispersing cone (29), which is tapered downwardly and is spaced upwardly from the bottom of the chamber, is arranged in the chamber (15), said cone carrying upwardly and slightly outwardly extending hollow discharge needles (32), to which the liquid is fed with said first, constant pressure via passages (33) in the dispensing cone (29) and whose tips (34) are flattened to form broad, slot-shaped apertures, with the longer dimensions of the slot-shaped apertures being aligned tangentially.

7. Apparatus according to any one of claims 4 to 6, **characterized by** sensors (21, 22, 23) for maintaining the liquid level in the chamber (15) below the slot-shaped apertures (tips 34) of the needles (32).

8. Apparatus according to any one of claims 4 to 7, **characterized by** a dosing valve (18) to which the liquid (F) is fed from the chamber (15) via a conduit (17) by the constant, second pressure prevailing in the chamber (15).

9. Apparatus according to claim 8, **characterized in that** the dosing valve (18) includes a valve needle (49) which, in the closed state, seals the outlet aperture in such a way that no space remains in front of the tip of the valve needle (49) in which liquid (F) could remain in the closed state of the dosing valve (18).

## Revendications

1. Procédé d'élimination des bulles de gaz d'un liquide (F) visqueux à distribuer, le liquide (F) étant introduit dans une chambre (15) fermée sous une première pression, en un jet large mince, la chambre (15) étant partiellement remplie par le liquide (F), de sorte que les bulles de gaz puissent sortir du liquide introduit, et dans la chambre (15) régnant une deuxième pression inférieure à la première pression, de manière que les bulles de gaz présentes dans le liquide puissent se dilater et éclater, **caractérisé en ce que** la deuxième pression suffit pour amener le liquide de la chambre (15) à un dispositif de distribution (soupape de dosage 18) et l'expulser de celui-ci, et **en ce que** la différence entre la première pression, sous laquelle le liquide est introduit dans la chambre (15), et la deuxième pression, régnant dans la chambre (15), est constante.

2. Procédé selon la revendication 1, **caractérisé en ce que** le liquide présent dans la chambre (15) est maintenu à un niveau situé au-dessous de l'emplacement (pointes d'aiguille 34) auquel le liquide est introduit dans la chambre (15).

3. Procédé selon la revendication 1 ou 2, **caractérisé en ce que** la première et la deuxième pression sont constantes.

4. Dispositif de mise en oeuvre du procédé selon l'une des revendications 1 à 3,
avec un récipient de dégazage (13), dans lequel se trouve une chambre (15) fermée;
avec un dispositif (10, 11, 12, 14) pour l'amenée du liquide (F) dans la chambre (15);
avec un dispositif pour évacuer le liquide (F) de la chambre (15); et
avec un dispositif pour évacuer le gaz accumulé hors de la chambre (15),
**caractérisé en ce que**
le dispositif d'amenée du liquide (F) amène celui-ci sous une première pression, constante, et
**en ce que** le dispositif d'évacuation du gaz accumulé hors de la chambre (15) est un régulateur fin de pression (16), qui entretient dans la chambre (15) une deuxième pression constante, plus faible, suffisant pour amener le liquide de la chambre (15) à un dispositif de distribution (soupape de dosage 18) et l'expulser de celui-ci.

5. Dispositif selon la revendication 4, **caractérisé en ce que** le dispositif d'amenée du liquide (F) à la première pression constante présente un réservoir à pression (10) pour une réserve de liquide et une source d'air comprimé (14), générant la première pression constante dans le réservoir à pression (10).

6. Dispositif selon la revendication 4 ou 5, **caractérisé en ce que**, dans la chambre (15), est disposé un cône de distribution (29) allant en s'effilant en direction du bas et espacé du fond de la chambre, cône portant des aiguilles creuses (32) dirigées vers le haut et légèrement vers l'extérieur, auxquelles le liquide est amené, sous la première pression constante, au moyen de canaux (33) ménagés à l'intérieur du cône de distribution (29) et dont la pointe (34) est aplatie pour donner une ouverture large, en forme de fente, la grande dimension de l'ouverture de la fente étant orientée en direction tangentielle.

7. Dispositif selon l'une des revendications 4 à 6, **caractérisé par** des capteurs (21, 22, 23) pour conserver le niveau de liquide dans la chambre (15) à une hauteur située au-dessous des ouvertures de fente (pointes 34) des aiguilles (32).

8. Dispositif selon l'une des revendications 4 à 7, **caractérisé par** une soupape de dosage (18) à laquelle le liquide (F) venant de la chambre (15) est amené au moyen de la deuxième pression constante, régnant dans la chambre (15), par l'intermédiaire d'une conduite liaison (17).

9. Dispositif selon la revendication 8, **caractérisé en ce que** la soupape de dosage (18) présente une aiguille de soupape (49), obturant l'ouverture de sortie lorsque l'on est à l'état fermé, **en ce que**, devant la pointe de l'aiguille de soupape (49), ne subsiste aucun espace dans lequel du liquide (F) pourrait demeurer lorsque la soupape de dosage (18) est à l'état fermé.
